# NEW EUROPEAN PATENT SPECIFICATION

(11) **EP 1 140 704 B2**
(45) Date of publication and mention of the opposition decision: **18.06.2008**
(45) Mention of the grant of the patent: 19.02.2003
(21) Application number: 99964565.8
(22) Date of filing: 14.12.1999
(51) Int. Cl.: C01G 45/00, C09C 1/00

(54) **BISMUTH MANGANESE OXIDE PIGMENTS**
BISMUTHMANGANIT-PIGMENTE
PIGMENTS D'OXYDE DE BISMUTH MANGANESE

(30) Priority: 18.12.1998 US 215498; 17.11.1999 US 441785
(43) Date of publication of application: 10.10.2001
(73) Proprietor: Ferro GmbH, 60327 Frankfurt (DE)
(72) Inventor: SAKOSKE, George, Emil, Washington, PA 15301 (US); SARVER, Joseph, E., Washington, PA 15301 (US); NOVOTNY, Miroslav, Denville, NJ 07834-9321 (US)
(74) Representative: Reinhardt, Markus
(86) International application number: PCT/EP1999/009887
(87) International publication number: WO 2000/037362

(56) References cited:
- I.V. BAIDIKOVA ET AL.: CATALYSIS TODAY, vol. 13, 1992, pages 511-516, XP000893146
- A.G. TUTOV ET AL.: SOVIET PHYSICS-SOLID STATE, vol. 6, no. 4, October 1964 (1964-10), pages 963-964, XP000901033
- "Synthesis of some inorganic pigments with sillenite structure" I. Lazau et al., in Materiale de Constructii, Vol. XXVII, nr. 3 (1997), pages 177-183.
- "Characterisation of bismuth-manganese oxide catalysts for methane oxidative coupling", I. Baidikova et al., Applied Catalysis A; General 89 (1992) 169-182.
- "Oxidative dhydrogenation of methane on Bi-Mn oxides", I.V. Baidikova et al., Catalysis Today, 13 (1992), 511-516.
- "New Compounds in the systems Bi2O3-Me2O3 (Fe3+,Al3+,Ga3+Mn3+), A.G. Tutov et al.,Soviet Physics-Solid State, 6, No. 4 (1964), 963-964.
- Kirk-Othmer Encyclopedia of Chemical Technology, Fourth Edition, vo. 19,(1996), 1-39.
- Kirk-Orthmer Encyclopedia of Chemical Technology, Fourth Edition, vol. 18, (1996), 1059-1072.
- Product data sheet for Johnson Mathey 13 Series Decorating System, 1998.
- "Colour - controlling composition to obtain the desired shade and hue", J. Henderson, Glass Technology, 36, No. 3, (1995), 68-69.

## Description

### Field of the invention

The present invention relates to pigments for plastics, glasses and other types of materials, and more particularly relates to bismuth manganese oxide pigments including pigments having a very low a*- and b*- value in the CIELAB - system and green bismuth manganese oxide pigments.

### Background information

Pigments are widely used in various application such as paints, inks, plastics, rubbers, ceramics, enamels and glasses. For example, U.S. Patent No. 5,336,612 to Byrne et al. discloses bismuth-containing colorants.

Of the bismuth manganese oxides, Bi₂Mn₄O₁₀ is used as a catalyst in the oxidative dehydrodimerization of methane (I.V. Baidakova, A.E. Khalilov, V.P. Vislovskii, E.A. Mamedov, R.G. Rizayev Catal. Today 1992, 13, 511 - 516).

Bismuth manganese oxides and some of their properties are described in A.G. Tutov, I.E. Myl'nikova, N.N. Parfenova, V.A. Bokov, S.A. Kizhaev, Soviet Physics - Solid State 1964, vol. 6, nr. 4, 963.

### Summary of the invention

The object of the present invention is to provide pigmented compositions which have a higher infrared reflectance and lower heat buildup properties than compositions/articles containing commercial black and green pigments.

The object is achieved by providing pigmented compositions as defined in claim 1 and claim 6, by providing an article as defined in claim 11 and in claim 15.

The present invention suggests bismuth manganese oxide pigments which may be used as additives to plastics, plastic or organic coating compositions, textiles, glass and ceramic coating compositions, and the like. The bismuth manganese oxide pigments preferably comprise Bi₂Mn₄O₁₀ having an orthorhombic crystal structure and Bi₁₂MnO₂₀ having a green color and a cubic crystal structure. The pigments provide improved heat buildup properties.

The bismuth manganese oxide pigments may be used in many applications such as automotive and marine paints, and colored plastics such as vinyl siding, where one property of the bismuth manganese oxide pigments is very high infrared reflectance. These infrared reflective properties exhibit much less heat buildup and much higher infrared radiation reflectance in comparison with commercial black and green pigments.

Another use is in the ceramic industry in application such as enamel borders around windshields, back lights, etc. used for automobiles to enhance appearance and to prevent ultraviolet (UV) degradation of underlying adhesives. Compositions including the present bismuth manganese oxide pigments also have advantages in architectural, container, and other glass or ceramic decorative applications where reduced heat buildup is desired.

Another property exhibited by the present bismuth manganese oxide pigments is the ability to render a surface markable when exposed to a laser, allowing the formation of a high contrast mark with minimal disruption of the surface. Some laser marking uses would be in plastics, organic coatings, metal marks, and any other type of similar mark which can be made readable by interaction with the laser beam.

The bismuth manganese oxide preferably comprises Bi₂Mn₄O₁₀ having an orthorhombic crystal structure. Other preferred pigments comprise Bi₁₂MnO₂₀ having a cubic crystal structure and a green color.

An aspect of the present invention is to provide a coating composition including a liquid carrier and a pigment comprising bismuth manganese oxide dispersed therein.

A further aspect of the present invention is to provide an enamel composition comprising glass frit and bismuth manganese oxide pigment.

Another aspect of the present invention is to provide an article including a substrate matrix and bismuth manganese oxide pigment dispersed in the matrix.

A further aspect of the present invention is to provide an article including a substrate and a coating comprising a bismuth manganese oxide pigment covering at least a portion of the substrate.

These and other aspects of the present invention will be more apparent from the following description.

### Brief description of the drawings

Figure 1 is a graph illustrating visible and infrared reflectance characteristics for various bismuth manganese oxide pigments of the present invention having a very low a*- and b* value.

Figure 2 is a graph showing visible and infrared reflectance characteristics of a material comprising a bismuth manganese oxide pigment (Bi₂Mn₄O₁₀) of the present invention in comparison with materials comprising a conventional pigment (spinel pigment).

Figure 3 is a graph showing visible and infrared reflectance characteristics of a material comprising TiO₂ and a bismuth manganese oxide pigment (Bi₂Mn₄O₁₀) of the present invention in comparison with a material comprising TiO₂ and a conventional material (spinel pigment).

Figure 4 is a graph illustrating visible and infrared reflectance characteristics at wavelengths of up to 1,100 nm for a bismuth manganese oxide green pigment of the present invention Bi₁₂MnO₂₀ in comparison with conventional green pigments.

Figure 5 is a graph illustrating visible and infrared reflectance characteristics at wavelengths of up to 2,500 nm for a bismuth manganese oxide green pigment of the present invention (Bi₁₂MnO₂₀).

### Detailed description

This invention relates to the use of bismuth manganese oxide as a pigment. The bismuth manganese oxide pigment preferably comprises Bi₂Mn₄O₁₀ crystallized in the orthorhombic crystal structure. Another preferred pigment is green and comprises Bi₁₂MnO₂, crystallized in the cubic crystal structure as demonstrated by standard X-ray. diffraction technique. The present bismuth manganese oxide pigments are useful in many applications, including organic chemical compositions such as plastics, rubbers, and the like, coating compositions such as paints, printing inks, and the like, and inorganic chemical compositions such as glass enamels, porcelain enamels, and the like.

The bismuth manganese oxide pigments have been found to impart unique properties such as high infrared (IR) reflectance. While not intending to be bound by theory, it is believed that the present bismuth manganese oxide pigment may impart such unique properties due to the electronic structure of the molecule and the interaction of this electronic structure with infrared light energy.

The present bismuth manganese oxide pigments preferably have average particle sizes of from about 0.1 to about 20 microns, more preferably from about 0.5 to about 5 microns.

The bismuth manganese oxide pigments may be formed by processes such as sol-gel and chemical precipitation. A particularly preferred process for making the present bismuth manganese oxide pigments is to mix bismuth oxide and manganese oxide powders, followed by calcination at 700 to 900 °C. As to a preferred method the calcined mixture is comminuted to an average particle size of from 0,1 to 20 microns.

For producing pigments having a very low a*- and b*- color value the weight ratio of bismuth oxide to manganese oxide preferably ranges from about 1:2 to about 2:1. In this embodiment, the mixed powders are preferably calcined at temperatures of from about 810 to about 900 °C, more preferably from about 840 to about 880 °C.
Calcination times of from about 3 to about 60 hours are preferred, more preferably from about 5 to about 15 hours.

For producing green pigments the mixed powders are preferably calcined at temperatures of from about 700 to about 800 °C, more preferably from about 720 to about 750 °C. Calcination times of from about 3 to about 100 hours are preferred, more preferably from about 5 to about 50 hours.

In a preferred embodiment of the present invention, the bismuth manganese oxide pigment comprises Bi₂Mn₄O₁₀. However, a stoichiometric excess of either Bi or Mn may be present in the pigment. The pigment composition may be formed, for example, by mixing powders of Bi₂O₃ and MnO₂ in the appropriate ratio to form the desired composition, followed by calcining. For instance, 57.3 weight percent Bi₂O₃ and 42.7 weight percent MnO₂ may be mixed and calcined to form Bi₂Mn₄O₁₀. The ratio of Bi₂O₃ to MnO₂, or the ratio of other Bi-containing and Mn-containing compositions, may be adjusted in order to achieve the desired bismuth manganese oxide composition.

In another preferred embodiment of the present invention, the bismuth manganese oxide pigment comprises Bi₁₂MnO₂₀. However, a stoichiometric excess of either Bi or Mn may be present in the pigment. The pigment composition may be formed, for example, by mixing powders of Bi₂O₃ and MnO₂ in the appropriate ratio to form the desired composition, followed by calcining. For instance, 97 weight percent Bi₂O₃ and 3 weight percent MnO₂ may be mixed and calcined to form Bi₁₂MnO₂₀. The ratio of Bi₂O₃ to MnO₂, or the ratio of other Bi-containing and Mn-containing compositions, may be adjusted in order to achieve the desired bismuth manganese oxide composition.

Table 1 lists visual characteristics of various bismuth manganese oxide pigments of the present invention using the conventional CIELAB color scale. Sample D comprises stoichiometric Bi₂Mn₄O₁₀ formed by calcining a stoichiometric mixture of Bi₂O₃ and MnO₂. Samples A, B and C listed in Table 1 are formed from the calcination of Bi₂O₃/MnO₂ mixtures comprising 20, 10 and 5 weight percent excesses of Bi₂O₃, respectively. Samples E, F and G are formed from the calcination of Bi₂O₃/MnO₂ mixtures comprising 5, 10 and 20 weight percent excesses of MnO₂, respectively.

**Table 1**

| Color characteristics of bismuth manganese oxide pigment tint trials | | | | | |
|---|---|---|---|---|---|
| **Sample** | **L*** | **a*** | **b*** | **C*** | **h** |
| A | 63.27 | -0.50 | -1.61 | 1.68 | 252.66 |
| B | 62.63 | -0.73 | -2.44 | 2.55 | 253.44 |
| C | 62.11 | -0.68 | -2.75 | 2.83 | 256.18 |
| D | 61.20 | -0.49 | -2.88 | 2.92 | 260.36 |
| E | 63.48 | -0.46 | -2.72 | 2.76 | 260.36 |
| F | 64.33 | -0.42 | -2.53 | 2.56 | 260.53 |
| G | 64.64 | -0.43 | -2.46 | 2.50 | 260.08 |

| | | | | | |
|---|---|---|---|---|---|
| L* is lightness on a scale of O(black) to 100 (white); a* is red/green value on a scale of -60 (green) to +60 (red); b* is yellow/blue value on a scale of -60 (blue) to +60 (yellow); C* defines chroma (C = (a^{*2} + b ^{*2}) ^{½}) ; and h is hue angle | | | | | |

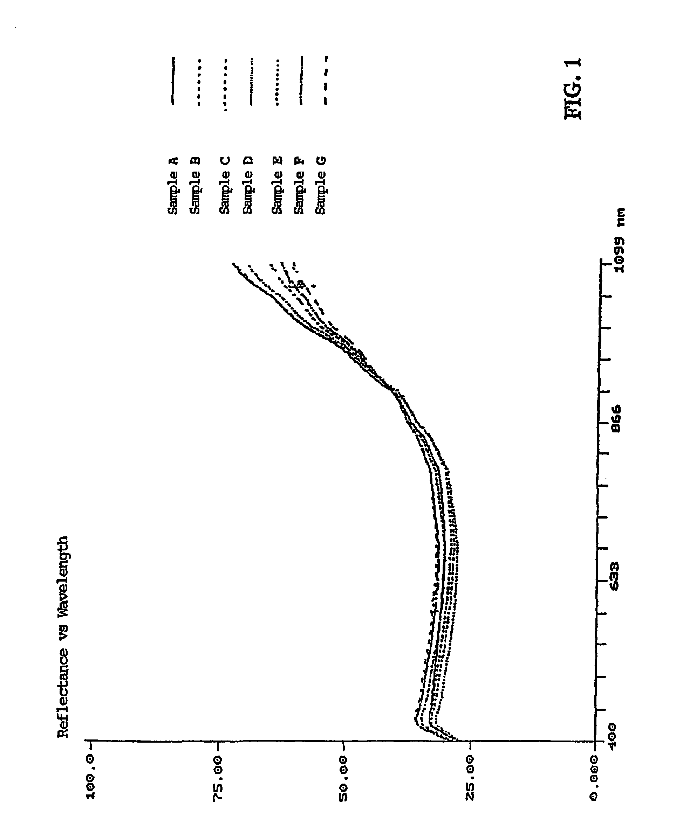

The bismuth manganese oxide pigments listed in table 1 have very low red/green and yellow/blue values, and have moderate lightness values in the visible spectrum. The visible and IR reflectance characteristics of Samples A-G in table 1 are shown in Figure 1. The visible and IR measurements shown in Figure 1 were made on a Datacolor Spectrophotometer. Higher IR reflectance values will yield lower heat buildup on a particular substrate.

Table 2 lists visual characteristics of test samples H1 to H4 containing a green bismuth manganese oxide pigment of the present invention using the conventional CIELAB color scale. The pigment H was prepared by mixing 97.0 grams of Bi₂O₃ and 3.0 grams of MnO₂ and calcining the mixture at temperatures of 721 to 738 °C for 63 hours. After calcining, 12.3 grams of the pigment were mixed with 39.4 grams of alkyd/melamine premix, shaken and applied on a substrate with a draw down bar at a thickness of 1.5 mils. The samples were then baked for 30 minutes. The heat stability time and temperature for each sample are shown in parentheses.

**Table 2**

| Color characteristics of coatings containing a bismuth manganese oxide green pigment (Pigment H) | | | | | | | |
|---|---|---|---|---|---|---|---|
| Sample | L* | a* | b* | ΔL* | Δa* | Δb* | ΔE* |
| H 1 (3 min/220 °C) | 55.52 | -9.19 | 22.60 | | | | |
| H 2 (5 min/240 °C) | 56.23 | -9.13 | 23.41 | 0.71 | 0.06 | 0.81 | 1.08 |
| H 3 (5 min/280 °C) | 55.93 | -7.91 | 22.13 | 0.41 | 1.28 | -0.46 | 1.42 |
| H 4 (5 min/300 °C) | 53.39 | -6.32 | 18.71 | -2.13 | 2.88 | -3.89 | 5.28 |

| | | | | | | | |
|---|---|---|---|---|---|---|---|
| L* is lightness on a scale of O (black) to 100 (white); a* is red/green value on a scale of -60 (green) to +60 (red) ; b* is yellow/blue value on a scale of -60 (blue) to +60 (yellow) ; ΔL* is the lightness or darkness difference between Sample 1 and Samples 2, 3 and 4; Δa* is the red/green difference between Sample 1 and Sample 2, 3 and 4; Δb* is the yellow/blue difference between Sample 1 and Samples 2, 3 and 4; and ΔE* is combined difference of the L, a, b values of Sample 1 and Samples 2, 3 and 4. | | | | | | | |

The bismuth manganese oxide pigments listed in table 2 have high green values, and have moderate lightness values in the visible spectrum.

Plastic or rubber compositions to which the bismuth manganese oxide pigments may be added in accordance with this invention include polymeric materials that are natural or synthetic. Examples include natural resins, rubber, chlororubber, casein, oil-modified alkyd resins, viscose, cellulose acetate, cellulose propionate, cellulose acetobutyrate, nitrocellulose, or other cellulose ethers or esters. Synthetic organic polymers produced by polymerization, polyaddition, or polycondensation in thermosetting or thermoplastics can also be colored by this invention. Examples are polyethylene, polystyrene, polypropylene, polyisobutylene, polyvinylchloride, polyvinylacetate, polyacrylonitrile, poly acrylic acid, other polyolefins and substituted polyolefins, as well as methyacrylic acid esters, butadiene, as well as copolymers of the above mentioned. Examples from polyaddition and polycondensation resins are the condensation products of formaldehyde with phenols, phenolic resins, urea, thiourea, and melamine, amino resins, polyesters, polyamides, polycarbonates, and/or silicones. These polymers can be present individually or as mixtures as plastic material or melts spun into fibers. They can also be dissolved as film formers or binders for lacquers, paints, or printing inks such as linseed oil, nitrocellulose, melamine resins, acrylic resins, ureaformaldehyde resins and the like.

In an embodiment of the present invention, a glass-ceramic enamel composition is provided comprising from about 0.1 to about 70 weight percent of the bismuth manganese oxide pigment and from about 30 to about 99.9 weight percent solids of glass frit compositions, or a combination of two or more frits. Additional oxide pigments may be added to the compositions such as CuCr₂O₄, (Co,Fe)(Fe,Cr)₂O₄, silica, alumina, wollastanite, feldspar, titania, and the like.

As used herein, the term "glass frit" means pre-fused glass material which is typically produced by rapid solidification of molten material followed by grinding or milling to the desired powder size. Preferred glass frits may comprise from 0 to about 75 weight percent lead oxide, from 0 to about 75 weight percent bismuth oxide, from 0 to about 75 weight percent silica, from 0 to about 50 weight percent zinc oxide, from 0 to about 40 weight percent boron oxide, from 0 to about 15 weight percent aluminium oxide, from 0 to about 15 weight percent zirconium oxide, from 0 to about 8 weight percent titanium oxide, from 0 to about 20 weight percent phosphorous oxide, from 0 to about 15 weight percent calcium oxide, from 0 to about 10 weight percent manganese oxide, from 0 to about 7 weight percent copper oxide, from 0 to about 5 weight percent cobalt oxide, from 0 to about 15 weight percent iron oxide, from 0 to about 20 weight percent sodium oxide, from 0 to about 20 weight percent potassium oxide, from 0 to about 15 weight percent lithium oxide and from 0 to about 7 weight percent fluoride, as well as other oxides conventionally used in glass frit compositions.

In addition to solid mixtures, the present bismuth manganese oxide pigments may be provided in liquid or paste form. Suitable liquid carriers for the bismuth manganese oxide pigments include pine oils, vegetable oils, mineral oils, low molecular weight petroleum fractions, tridecyl alcohols, synthetic resins and natural resins. When used in paints for architectural, automotive, marine and other applications, the bismuth manganese oxide pigment comprises from about 0.1 to about 50 weight percent of the liquid paint composition, more preferably from about 1 to about 30 weight percent. For example, latex architectural paints preferably comprise from about 0.5 to about 50 weight percent of the bismuth manganese oxide pigments, with the remainder of the paint comprising water, resin and solvents. Oil-based paints preferably comprise from about 0.5 to about 50 weight percent of the present bismuth manganese oxide pigments, with the remainder comprising organic solvents, resin and additives.

In a particular embodiment, a printable enamel paste comprises from about 60 to about 85 weight percent of the above-listed glass-ceramic enamel solid powder mixture, plus from about 15 to about 40 weight percent of a suitable carrying vehicle or medium which can be applied on a substrate by screen printing, roll coating or spraying.

In a further embodiment, a substrate may be coated with the above glass-ceramic enamel composition, and then fired. The substrate may comprise, for example, automotive glass, architectural glass, container glass, metal or the like.

The use of the present bismuth manganese oxide pigments in coatings or materials such as carbon-carbon composites may also be advantageous with regard to IR reflection characteristics. As used herein, the term "IR reflectance" means the reflectance properties of a material at wavelengths above about 700 nm. The IR wavelengths include near-IR (750-2,000 nm), mid-IR (2,000-4,000 nm), and far-IR (4,000-5,500 nm).

Articles coated with or containing the present pigments may have an improved IR reflectance, preferably an IR reflectance, of greater than about 50 percent at a wavelength of 1,100 nm. Articles containing the green pigments also preferably maintain an IR reflectance of greater than about 50 percent at higher wavelengths. e. g., up to 2,500 nm.

Plastic, rubber, paint and other compositions incorporating the present Bi₂Mn₄O₁₀ or Bi₁₂MnO₂₀ pigments may possess improved IR reflectance properties. Also, various types of substrates may be coated with the present pigments, such as wood, glass, ceramic, metal, plastic and composite substrates to provide an organic coating or paint which would contain and utilize the low heat buildup properties of the bismuth manganese oxide pigment.

Table 3 lists visible and IR reflectance characteristics of different materials. Samples 1 and 4 comprise bismuth manganese oxide pigments in accordance with the present invention, while Samples 2, 3, 5 and 6 comprise commercially available black pigments. Specifically, Sample 1 comprises 1 weight percent Bi₂Mn₄O₁₀ and 99 weight percent rigid polyvinylchloride (RPVC); Sample 2 comprises 1 weight percent (Cr,Fe)(Fe,Cr)₂O₄ and 99 weight percent RPVC; Sample 3 comprises 1 weight percent CuCr₂O₄ (Shepherd 1-G) and 99 weight percent RPVC; Sample 4 comprises 1 weight percent Bi₂Mn₄O₁₀, 9 weight percent TiO₂ and 90 weight percent RPVC; Sample 5 comprises 1 weight percent (Cr,Fe) (Fe,Cr)₂O₄, 9 weight percent TiO₂ and 90 weight percent RPVC; and Sample 6 comprises 1 weight percent CuCr₂O₄, 9 weight percent TiO₂ and 90 weight percent RPVC. The reflectance values listed in Table 3 are percentages.

**TABLE 3**

| Reflectance characteristics of samples at visible and IR wavelengths | | | | | | |
|---|---|---|---|---|---|---|
| Wavelength (nm) | Sample 1 Reflectance | Sample 2 Reflectance | Sample 3 Reflectance | Sample 4 Reflectance | Sample 5 Reflectance | Sample 6 Raflectance |
| 400 | 7.01 | 6.00 | 6.21 | 32.72 | 33.22 | 32.57 |
| 500 | 7.15 | 5.94 | 6.06 | 43.80 | 43.97 | 42.81 |
| 600 | 7.41 | 5.99 | 5.70 | 43.92 | 42.11 | 39.43 |
| 700 | 8.15 | 6.81 | 5.74 | 44.55 | 41.89 | 37.19 |
| 800 | 10.22 | 17.63 | 6.02 | 47.68 | 58.79 | 35.77 |
| 900 | 16.39 | 29.47 | 7.55 | 55.91 | 69.28 | 38.46 |
| 1,000 | 33.12 | 42.13 | 9.22 | 70.38 | 76.77 | 41.97 |
| 1,100 | 54.59 | 38.88 | 7.44 | 81.85 | 73.82 | 36.96 |

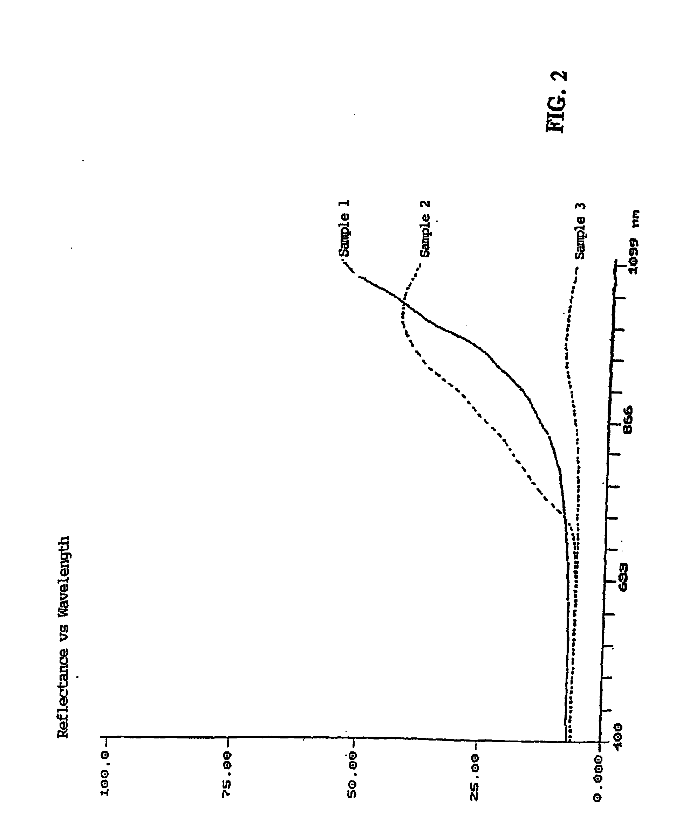

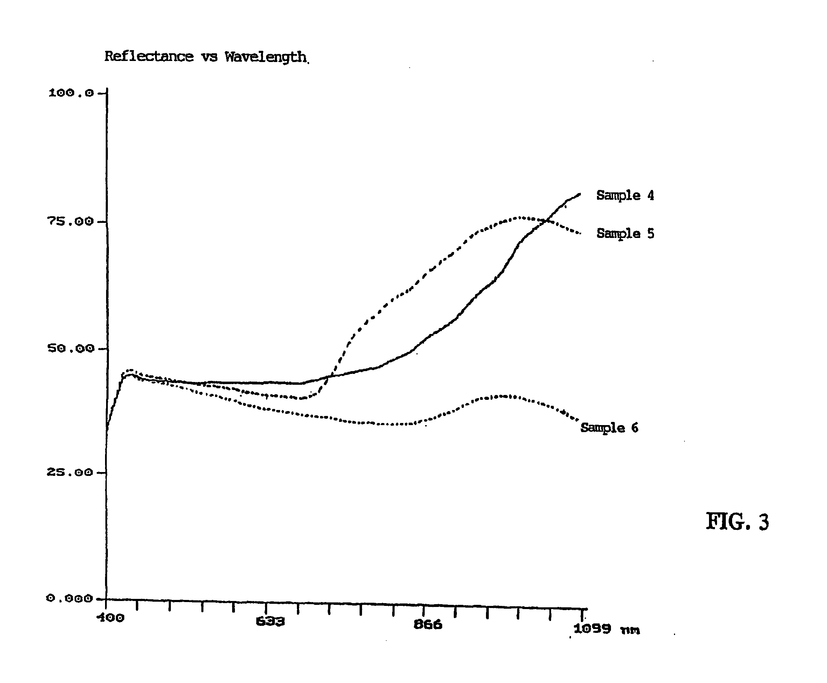

The visible and infrared reflectance properties of Samples 1-3 are graphed in Figure 2, while the visible and IR reflectance characteristics of Samples 4-6 are graphed in Figure 3.

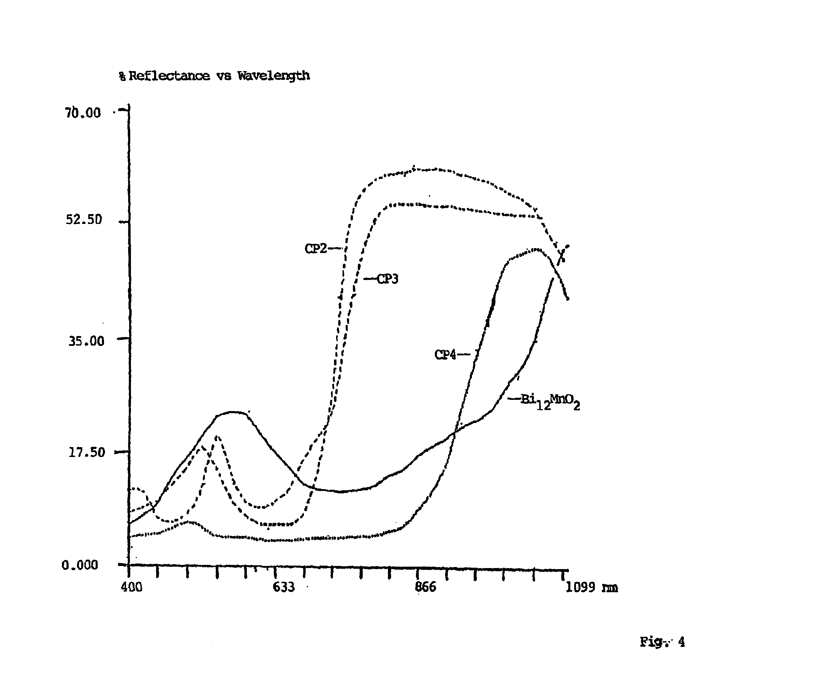

The visible and IR reflectance characteristics at wavelengths up to 1,100 nm for the Bi₁₂MnO₂₀ pigment (=pigment H), in comparison with three conventional green pigments (CP 1 to CP 3), are shown in Figure 4. The visible and IR measurements shown in Figure 1 to 4 were made on a Datacolor Spectrophotometer. Higher IR reflectance values will yield lower heat buildup on a particular substrate.

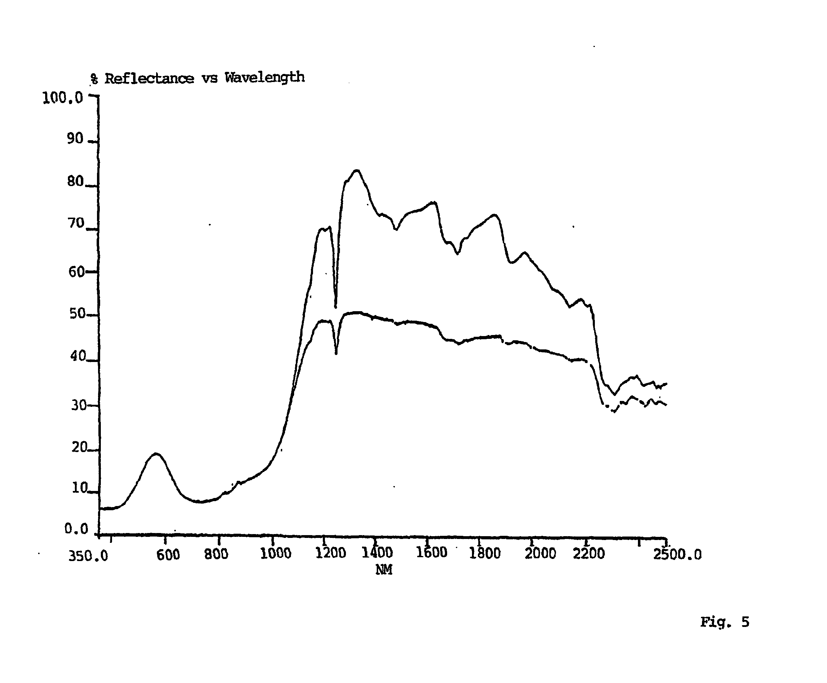

Figure 5 shows the visible and IR reflectance characteristics at wavelengths up to 2,500 nm for the present Bi₁₂MnO₂₀ pigment. The upper trace shown in Figure 5 represents the pigment coating over a white leneta substrate, while the lower trace represents the pigment coating over a black leneta substrate.

As illustrated in table 3 and Figures 2 to 5, materials comprising the present bismuth manganese oxide pigments possess comparable reflectance characteristics at visible wavelengths, but possess markedly increased reflectance characteristics at IR wavelengths in comparison with materials comprising conventional black pigments and green pigments, respectively. The present bismuth manganese oxide pigments thus appear relatively dark at visible wavelengths and relatively light at IR wavelengths. These reflectance characteristics are highly advantageous in applications where heat buildup due to the absorption of IR radiation is to be minimized. The improved IR reflectance characteristics of the present bismuth manganese oxide pigments is also highly advantageous in applications where detection by IR sensors is to be minimized.

The ability of the present bismuth manganese oxide pigments to reduce heat buildup from IR radiation is illustrated in table 4, whereby table 4 is directed to grey to black pigments and table 5 to green pigments.
Samples 7 and 11 include bismuth manganese oxide pigments of the present invention, while Samples 8-10, 12 and 13 comprise commercially available black pigments.
Specifically, Sample 7 comprises 1 weight percent Bi₂Mn₄O₁₀ and 99 weight percent RPVC; Sample 8 comprises 0.25 weight percent carbon black (Raven 1190) and 99.75 weight percent RPVC; Sample 9 comprises 1 weight percent CuCr₂O₄ and 99 weight percent RPVC; Sample 10 comprises 1 weight percent (Cr,Fe)(Fe,Cr)₂O₄ and 99 weight percent RPVC; Sample 11 comprises 1 weight percent Bi₂Mn₄O₁₀, 9 weight percent TiO₂ and 90 weight percent RPVC; Sample 12 comprises 1 weight percent CuCr₂O₄, 9 weight percent TiO₂ and 90 weight percent RPVC; and Sample 13 comprises 1 weight percent (Cr,Fe)(Fe,Cr)₂O₄, 9 weight percent TiO₂ and 90 weight percent RPVC.

**TABLE 4**

| Infrared radiation induced heat build up | | | | |
|---|---|---|---|---|
| Sample | Tm ^{*)} | ΔT ^{*)} | ΔTv ^{*)} | ΔTh ^{*)} |
| 7 | 65,1 | 24,9 | 15,8 | 22,7 |
| 8 | 74,5 | 34,5 | | |
| 9 | 85,0 | 44,9 | 31,5 | 42,2 |
| 10 | 75,7 | 35,6 | 24,2 | 33,2 |
| 11 | 56,0 | 15,8 | 8,6 | 14,2 |
| 12 | 71,6 | 31,3 | 21,1 | 29,2 |
| 13 | 63,9 | 23,8 | 14,7 | 21,7 |

| | | | | |
|---|---|---|---|---|
| ^{*)} see remarks below table 5 | | | | |

Sample 14 includes a green bismuth manganese oxide green pigment of the present invention, while Samples 15, 16 and 17 comprise commercially available green pigments. Sample 18 comprises a commercially available black pigment. Specifically, Sample 14 comprises 25 weight percent bismuth manganese oxide green Bi₁₂MnO₂₀ pigment H and 38 weight percent alkyd/melamine balance xylene solvent; Sample 15 comprises 25 weight percent Green 10405 (=CP 2) and 38 weight percent alkyd/melamine, balance xylene solvent; Sample 16 comprises 10 weight percent Phthalocyanine Green (=CP 4) and 50 weight percent alkyd/melamine, balance xylene solvent; Sample 17 comprises 25 weight percent chrome oxide Green 6099 (= CP 3) and 38 weight percent alkyd/melamine, balance xylene solvent; and Sample 18 comprises 2.5 weight percent carbon black in 97.5 weight percent rigid polyvinylchloride.

**Table 5**

| Infrared radiation induced heat build up | | | | | |
|---|---|---|---|---|---|
| Sample | Ta | Tm | ΔTlu | ΔTv | ΔTh |
| 14 | 22,4 | 65,2 | 25,0 | 4,8 | 9,7 |
| 15 | 22,5 | 74,0 | 33,7 | 9,3 | 15,2 |
| 16 | 22,4 | 68,2 | 28,0 | 6,3 | 11,6 |
| 17 | 21,2 | 68,4 | 28,5 | 6,6 | 11,9 |
| 18 | 22,4 | 100,4 | 60,2 | | |
| Ta is the starting temperature or ambient temperature (°C); | | | | | |
| Tm is maximum temperature of sample (°C); | | | | | |
| ΔTlu is Tm minus Ta; | | | | | |
| ΔTv indicates vertical heat buildup (°C) per the 74F ASTM heat build-up test procedure; and | | | | | |
| ΔTh indicates horizontal heat buildup (°C) per the 90F ASTM heat build-up procedure. | | | | | |

As shown in table 4 and table 5, Samples 7, 11 and 14 comprising bismuth manganese oxide pigments in accordance with the present invention exhibit substantially decreased heat buildup when subjected to IR radiation in comparison with commercially available pigments. The ability of the present bismuth manganese oxide pigments to reduce IR-induced heat buildup has particular significance for uses such as architectural, automotive, military, aerospace, industrial and electronics applications.

Whereas particular embodiments of this invention have been described above for purposes of illustration, it will be evident to those skilled in the art that numerous variations of this details of the present invention may be made without departing from the invention as defined in the appended claims.

## Claims

1. A pigmented composition comprising a substrate matrix and a pigment, wherein the pigment is a bismuth manganese oxide pigment, the composition is coating composition and the composition comprises a liquid carrier, wherein the pigment comprises from about 0.1 to about 50 weight percent of the coating composition.

2. A pigmented composition of claim 1, wherein the bismuth manganese oxide comprises Bi₂Mn₄O₁₀.

3. A pigmented composition of claim 1, wherein the bismuth manganese oxide is green and comprises Bi₁₂MnO₂₀.

4. A pigmented composition of claim 1, wherein the pigment has an average particle size of from about 0.5 to about 20 microns.

5. The coating composition of claim 1, wherein the liquid carrier comprises at least one solvent selected from pine oils, vegetable oils, mineral oils, synthetic resins and natural resins.

6. A pigmented composition comprising a substrate matrix and a pigment, wherein the pigment is a bismuth manganese oxide pigment and the composition is an enamel composition comprising at least one glass frit.

7. An enamel composition of claim 6, wherein the bismuth manganese oxide comprises Bi₂Mn₄O_{10.}

8. An enamel composition of claim 6, wherein the bismuth manganese oxide is green and comprises Bi₁₂MnO₂₀.

9. An enamel composition of claim 6, wherein the pigment has an average particle size of from about 0.5 to about 20 microns.

10. The enamel composition of claim 6, wherein the pigment comprises from about 0.1 to about 70 weight percent and the at least one glass frit comprises from about 30 to about 99.9 weight percent of the enamel composition.

11. An article comprising or made from a pigmented composition comprising a substrate matrix and a pigment, wherein the pigment is a bismuth manganese oxide pigment, the substrate matrix comprises a natural or synthetic polymeric material and the article has an IR reflectance of greater than about 50 percent at a wavelength of 1100 nm.

12. An article of claim 11, wherein the bismuth manganese oxide comprises Bi₂Mn₄O₁₀.

13. An article of claim 11, wherein the bismuth manganese oxide is green and comprises Bi₁₂MnO₂₀.

14. An article of claim 11, wherein the pigment has an average particle size of from about 0.5 to about 20 microns.

15. An article comprising a substrate and a coating, wherein the coating covering at least a portion of the substrate is made by using a coating composition according to any of the claims 1 to 5 or an enamel composition according to claim 6 to 10.

16. The article of claim 15, wherein the substrate comprises glass, ceramic or metal, plastic, wood or composite.

17. The article of claim 15 or 16, wherein the coating has an IR reflectance of greater than about 50 percent at a wavelength of 1100 nm.

## Patentansprüche

1. Pigmentierte Zusammensetzung, umfassend eine Substratmatrix und ein Pigment, wobei das Pigment ein Bismutmanganoxid-Pigment ist, wobei die Zusammensetzung eine Beschichtungszusammensetzung ist und einen flüssigen Träger umfasst, und wobei das Pigment von etwa 0,1 bis etwa 50 Gew.-% der Beschichtungszusammensetzung umfasst.

2. Pigmentierte Zusammensetzung gemäß Anspruch 1, wobei das Bismutmanganoxid Bi₂Mn₄O₁₀ umfasst.

3. Pigmentierte Zusammensetzung gemäß Anspruch 1, wobei das Bismutmanganoxid grün ist und Bi₁₂MnO₂₀ umfasst.

4. Pigmentierte Zusammensetzung gemäß Anspruch 1, wobei das Pigment eine Durchschnittsteilchengröße von etwa 0,5 bis etwa 20 µm aufweist.

5. Beschichtungszusammensetzung gemäß Anspruch 1, wobei der flüssige Träger wenigstens ein Lösemittel, ausgewählt aus Pineölen, pflanzlichen Ölen, Mineralölen, synthetischen Harzen und natürlichen Harzen, umfasst.

6. Pigmentierte Zusammensetzung umfassend eine Substratmatrix und ein Pigment, wobei das Pigment ein Bismutmanganoxid-Pigment ist, wobei die Zusammensetzung eine Emaillezusammensetzung ist, die wenigstens eine Glasfritte umfasst.

7. Emaillezusammensetzung gemäß Anspruch 6, wobei das Bismutmanganoxid Bi₂Mn₄O₁₀ umfasst.

8. Emaillezusammensetzung gemäß. Anspruch 6, wobei das Bismutmanganoxid grün ist und Bi₁₂MnO₂₀ umfasst.

9. Emaillezusammensetzung gemäß Anspruch 6, wobei das Pigment eine Durchschnittsteilchengröße von etwa 0,5 bis etwa 20 µm aufweist.

10. Emaillezusammensetzung gemäß Anspruch 6, wobei das Pigment von etwa 0,1 bis etwa 70 Gew.-% der Emaillezusammensetzung und die wenigstens eine Glasfritte von etwa 30 bis etwa 99,9 Gew.-% der Emaillezusammensetzung umfasst.

11. Gegenstand, umfassend die pigmentierte Zusammensetzung oder hergestellt aus der pigmentierten Zusammensetzung, wobei die Zusammensetzung eine Substratmatrix und ein Pigment umfasst, wobei das Pigment ein Bismutmanganoxid-Pigment ist, wobei die Substratmatrix ein natürliches oder ein synthetisches polymerisches Material umfasst, und wobei der Gegenstand einen IR-Reflexionsgrad von größer als etwa 50 % bei einer Wellenlänge von 1100 nm aufweist.

12. Gegenstand gemäß Anspruch 11, wobei das Bismutmanganoxid Bi₂Mn₄O₁₀ umfasst.

13. Gegenstand gemäß Anspruch 11, wobei das Bismutmanganoxid grün ist und Bi₁₂MnO₂₀ umfasst.

14. Gegenstand gemäß Anspruch 11, wobei das Pigment eine Durchschnittsteilchengröße von etwa 0,5 bis etwa 20 µm aufweist.

15. Gegenstand umfassend ein Substrat und eine Beschichtung, wobei die Beschichtung zumindest einen Teil des Substrats bedeckt und mittels Benutzung einer Beschichtungszusammensetzung nach einem der Ansprüche 1 bis 5 oder mittels Benutzung einer Emailzusammensetzung nach einem der Ansprüche 6 bis 10 hergestellt ist.

16. Gegenstand gemäß Anspruch 15, wobei das Substrat Glas, Keramik oder Metall, Kunststoff, Holz oder einen Verbundstoff umfasst.

17. Gegenstand gemäß Anspruch 15 oder 16, wobei die Beschichtung einen IR-Reflexionsgrad von größer als etwa 50 % bei einer Wellenlänge von 1100 nm aufweist.

## Revendications

1. Composition pigmentée comprenant une matrice de substrat et un pigment, dans lequel le pigment est un pigment d'oxyde de bismuth-manganèse, la composition est une composition de revêtement et la composition comprend un véhicule liquide, dans laquelle le pigment comprend d'environ 0,1 à environ 50 pour cent en poids de la composition de revêtement.

2. Composition pigmentée selon la revendication 1, dans laquelle l'oxyde de bismuth-manganèse comprend du Bi₂Mn₄O₁₀.

3. Composition pigmentée selon la revendication 1, dans laquelle l'oxyde de bismuth-manganèse est vert et comprend du Bi₁₂MnO₂₀.

4. Composition pigmentée selon la revendication 1, dans laquelle le pigment a une taille moyenne de particule d'environ 0,5 à environ 20 microns.

5. Composition de revêtement selon la revendication 1, dans laquelle le support liquide comprend au moins un solvant choisi parmi les huiles de pin, les huiles végétales, les huiles minérales, les résines synthétiques et les résines naturelles.

6. Composition pigmentée comprenant une matrice de substrat et un pigment, dans laquelle le pigment est un pigment d'oxyde de bismuth-manganèse et la composition est une composition d'émail comprenant au moins une fritte de verre.

7. Composition d'émail selon la revendication 6, dans laquelle l'oxyde de bismuth-manganèse comprend du Bi₂Mn₄O₁₀.

8. Composition d'émail selon la revendication 6, dans laquelle l'oxyde de bismuth-manganèse est vert et comprend du Bi₁₂MnO₂₀.

9. Composition d'émail selon la revendication 6, dans laquelle le pigment a une taille moyenne de particule d'environ 0,5 à environ 20 microns.

10. Composition d'émail selon la revendication 6, dans laquelle le pigment comprend d'environ 0,1 à environ 70 pour cent en poids et la au moins une fritte de verre comprend d'environ 30 à environ 99,9 pour cent en poids de la composition d'émail.

11. Article comprenant ou réalisé en une composition pigmentée comprenant une matrice de substrat et un pigment, dans lequel le pigment est un pigment d'oxyde de bismuth-manganèse, la matrice de substrat comprend un matériau polymère naturel ou synthétique, et l'article avec un coefficient de réflexion des infrarouges supérieur à environ 50 pour cent à une longueur d'onde de 1 100 nm.

12. Article selon la revendication 11, dans lequel l'oxyde de bismuth-manganèse comprend du Bi₂Mn₄O₁₀.

13. Article selon la revendication 11, dans lequel l'oxyde de bismuth-manganèse est vert et comprend du Bi₁₂MnO₂₀.

14. Article selon la revendication 11, dans lequel le pigment a une taille moyenne de particule d'environ 0,5 à environ 20 microns.

15. Article comprenant un substrat et un revêtement, dans lequel le revêtement couvrant au moins une portion du substrat est réalisé en utilisant une composition de revêtement selon l'une quelconque des revendications 1 à 5, ou une composition d'émail selon les revendications 6 à 10.

16. Article selon la revendication 15, dans lequel le substrat comprend du verre, de la céramique ou du métal, du plastique, du bois ou du composite.

17. Article selon les revendications 15 ou 16, dans lequel le revêtement a un coefficient de réflexion d'infrarouges supérieur à environ 50 pour cent à une longueur d'onde de 1100 nm.
